# EUROPÄISCHE PATENTSCHRIFT

(11) **EP 2 607 013 B1**
(45) Veröffentlichungstag und Bekanntmachung des Hinweises auf die Patenterteilung: **06.09.2017**
(21) Anmeldenummer: 12196096.7
(22) Anmeldetag: 07.12.2012
(51) Int. Cl.: B23P 15/00, F02F 1/00

(54) **Verfahren zur Herstellung von zylindrischen Bauteilen**
Method for manufacturing cylindrical components
Procédé de fabrication de composants cylindriques

(30) Priorität: 22.12.2011 DE 102011056942
(43) Veröffentlichungstag der Anmeldung: 26.06.2013
(73) Patentinhaber: MAGNA BDW technolgies GmbH, 85570 Markt Schwaben (DE)
(72) Erfinder: Hahn, Rocco, 91781 Weißenburg i. Bayern (DE); Herrmann, Christian, 81929 München (DE); Niedermeier, Korbinian, 84424 Isen (DE); Weizenbeck, Richard, 85435 Erding (DE)
(74) Vertreter: Rausch, Gabriele

(56) Entgegenhaltungen:
- EP-A2- 0 743 180
- DE-A1-102004 007 774
- GB-A- 1 538 269
- US-A1- 2003 084 567
- US-B1- 6 298 818

## Beschreibung

Die vorliegende Erfindung betrifft ein Verfahren zur Herstellung eines rotationssymmetrischen, dünnwandigen Guss-Bauteils aus Aluminium oder einer Aluminiumlegierung in Druckguss, das teilweise auf seinen inneren und/ oder äußeren Mantelflächen überarbeitet wird.

### Stand der Technik

Im Automobilbereich werden in zunehmendem Masse Bauteile aus Stahl durch leichtere Bauteile ersetzt, wodurch sich beispielsweise eine Kraftstoffeinsparung beim Betrieb des Kraftfahrzeuges erzielen lässt. Dabei existieren jedoch zumindest die gleichen Anforderungen an die Bauteile aus leichteren Materialien wie an diejenigen aus Stahl, beispielsweise hinsichtlich der Korrosionsbeständigkeit, Bearbeitbarkeit und Steifigkeit.

Als Ersatzmaterialien bieten sich hierbei insbesondere Aluminiumlegierungen an. Aluminiumlegierungen weisen eine hohe Korrosionsbeständigkeit bei gleichzeitig guten mechanischen Eigenschaften wie Steifigkeit und Bearbeitbarkeit und einem verminderten Gewicht auf. Zudem lassen sich die Eigenschaften in Aluminiumlegierungen durch die Aluminiumlegierungsbestandteile beeinflussen.

Zur kostengünstigen Herstellung werden Teile aus Aluminiumlegierungen bevorzugt gegossen. Um eine gute Giessbarkeit der zumeist geometrisch hoch komplexen Gussteile zu gewährleisten, muss die Aluminiumlegierung auch das Giessen dünnwandiger Teile ermöglichen, die trotzdem die geforderte Stabilität aufweisen.

Der Zusammensetzung der Legierung kommt hier besondere Bedeutung zu. Durch diese werden zunächst die Eigenschaften bestimmt, welche in Bezug auf ein Endprodukt erforderlich sind. Zudem beeinflusst sie jedoch auch die Eigenschaften, welche die Verarbeitung zum Endprodukt ermöglichen und erleichtern.

So beeinflusst beispielsweise der Siliziumgehalt einer Aluminiumlegierung das Fliessvermögen und damit die Giessbarkeit einer geschmolzenen Legierung. Um eine gute Giessbarkeit einer Aluminiumlegierung gewährleisten zu können, muss diese folglich einen Anteil an Silizium enthalten. Der Siliziumgehalt vermindert allerdings auch die Bruchdehnung sowie die mechanische Festigkeit des Gussteils. Diese sich gegenüberstehenden Eigenschaften sind jedoch besonders beim Giessen von hochfesten, grossen Gussteilen mit dünnwandigen Teilbereichen wichtig.

Beispiele für vorteilhafte Legierungen finden sich im Stand der Technik zahlreich sind aber nicht Teil der erfindungsgemäßen Lösung.

Gussteile weisen nach dem Gussvorgang eine raue Oberfläche mit einer zum Vollmaterial unterschiedlichen Sprödigkeit und Festigkeit auf. Solche Bauteile werden im Stand der Technik nachbearbeitet.
Aus der US20030084567A1 ist die Herstellung von Zylindern für einen Verbrennungsmotor. Dabei wird ein mehrstufiges Druckverfahren angewendet, um die Strukturen im Zylinder herzustellen.
US6298818B1 beschreibt die zylindrische Auskleidung eines Zylinderblocks in einer Kombination von Materialien aus Stahl und Aluminium. EP0743180A2 zeigt einen Ring geringer Dicke, der im Aluminiumguss hergestellt wird.
DE102004007774A1 zeigt eine Laufbuchse mit großer Rauigkeit, die in einem Motorblock eingegossen werden kann.

Die Erfindung beschreibt ein vorteilhaftes Bearbeitungsverfahren für zylindrische Bauteile, wobei die unterschiedlichen Materialeigenschaften des unbehandelten Aluminiumgusses und des bearbeiteten Aluminiumgusses vorteilhaft verwendet werden.

Vorteilhafterweise verwendet das Verfahren die Vorteile sowohl der unbearbeiteten Oberfläche des Alumniumgussteiles als Auflager für das Aufnehmen von Kräften bei Einbau in einer komplexere Struktur. Dabei ist von Vorteil, dass die unbearbeitete Oberfläche einen geringeren Abrieb als einen bearbeitete Oberfläche aufweist und somit das Bauteil langlebiger ist.

Gerade für Baugruppen, die in der Automobilindustrie unterschiedlichsten Temperaturen und gegebenenfalls hohen Kräften ausgesetzt sind ist dies vorteilhaft.

Ein weiterer Vorteil ist der geringere Platzbedarf des Bauteils in einer Baugruppe durch die mit dem Verfahren herstellbaren geringen Wandstärken.

Die Erfindung wird im Anspruch 1 beschrieben. Vorteilhafte Ausgestaltungen des Verfahrens sind Gegenstand der abhängigen Ansprüche.

Die Figuren sowie die anschließende Beschreibung zeigen repräsentative Ausführungsformen des erfindungsgemäßen Verfahrens.
Figur 1 zeigt ein zylindrisches Bauteil
Figur 2 zeigt ein Spannwerkzeug
Fig. 3 zeigt ein weiteres Ausführungsbeispiel
Fig. 4 zeigt ein Ablaufdiagramm

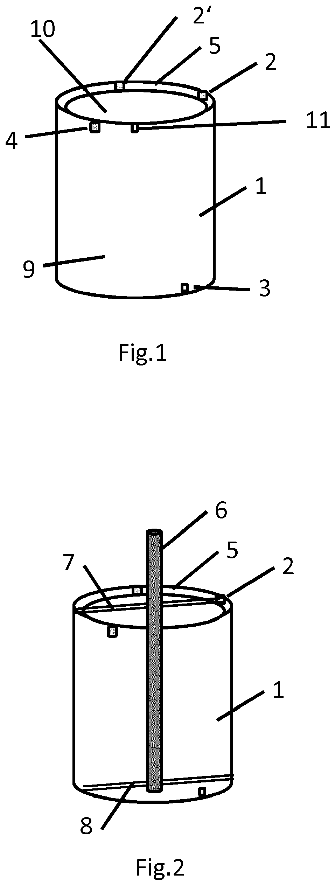

Figur 1 zeigt ein Beispiel eines zylindrischen Bauteiles, das in dieser Ausführungsform an beiden Stirnflächen 22 und 23 offen ist. Der Zylinder 1 weist eine äußere Mantelfläche 9 sowie eine innere Mantelfläche 10 auf. Der Zylinder wird als Gussteil mit mindestens einer Nase 3 am unteren Umfang des Zylinders und/oder mit mindestens einer Nase 11 am oberen Umfang gegossen. Die Funktion der Nasen 3 und 11 wird im Folgenden erklärt. Der Zylinder 1 besitzt einen Teilbereich 5 entlang des Randes der inneren Mantelfläche 10. Dieser Teilbereich 5 ist nicht zur Nachbehandlung der Flächen vorgesehen. Innerhalb des Teilbereich 5 sind Lagerflächen 2 und 2' vorhanden. Auch auf dem äußeren Mantel 9 ist eine Lagerfläche 4 beispielhaft dargestellt.

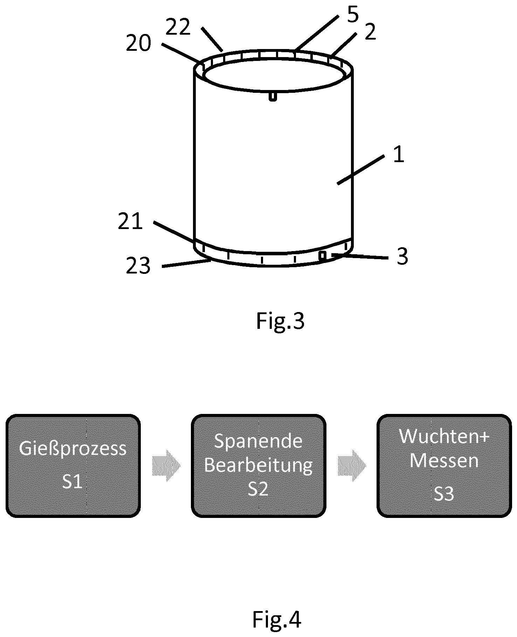

Im Herstellungsprozess wird der Zylinder 1 in einem ersten Schritt aus Aluminiumlegierung gegossen, entsprechend den Schritt S1 der Figur 4. Die Gussform enthält einen Mittelkern und eine Aussenform, in der Nasen vorgesehen sind. Nach dem Guss wird dem Gussrohling ein Code aufgebracht, wobei dessen Position mit der Nase 3 eindeutig festgelegt ist. In einem weiteren Prozessschritt S2 wird der Gussrohling auf einem Werkstückträger aufgesetzt. Dabei spielt die Drehorientierung des Zylinders eine große Rolle. Die Nase 3 sowie der Code dienen dabei zur Positionierung und eindeutigen Festlegung der Bearbeitungsposition des Zylinders. Nur in einer festgelegten Installationslage sitzt die Nase des Zylinders an der richtigen Stelle im Werkstückträger und der Code ist von einem Sensor lesbar.

In allen anderen Einbaulagen würde die Nase zwar eingepasst sitzen, aber der Code wäre an der falschen Stelle und damit unlesbar angeordnet. Alternative dazu wäre das Angießen mehrerer Nasen entlang des Umfangs denkbar, sodass die Positionierung eindeutig gewährleistet ist.

Wird der Zylinder in den weiteren Bearbeitungsschritten um 180 ° gewendet, funktioniert die Nase 11 in gleicher Weise zur drehgenauen Positionierung des Zylinders.

Der Zylinder wird in Drehmaschinen sowohl auf seiner Mantelinnenseite 10 als auch auf seiner Mantelaußenseite 9 überdreht, wobei mindestens ein Teilbereich 5 der Mantelinnenseite unbehandelt bleibt. In dem Teilbereich 5 sind Rohguss-Lagerflächen 2, 2' vorhanden, die direkt im Gießprozess erzeugt werden. Die Lagerflächen 2, 2' dienten als Anlage für ein Spannwerkzeug 6, das in den Zylinder eingeführt wird und mit Spannelementen 7 an den Lagerflächen angreift. Das Spannwerkzeug ist so ausgelegt, dass der Zylinder zur Erreichung höchster Präzision rundgespannt ist. Als Lagerflächen sind dazu mindestens zwei Rohgussflächen 2,2' vorhanden. Der innen rundgespannte Zylinder kann so auf seiner Mantelaußenfläche 9 abgedreht werden. Die geringen Wandstärken des Zylinders reduzieren die inhärente Stabilität des Bauteiles und machen ein aufwändigeres Spannkonzept erforderlich. Das Spannkonzept nimmt dabei den zukünftigen Einbau in einer Baugruppe vorweg, um so dieselben Lagerstellen zu verwenden. Zudem werden die zentrische Einbaulage und das Drehverhalten des Zylinders schon in der Bearbeitungssituation optimal festgelegt.

Für das Bearbeiten der Innenmantelfläche 10 wird der Zylinder 1 von außen rundgespannt, wobei Lagerflächen 4 auf dem äußeren Mantel genau gegenüber den im Innenmantel angeordneten Lagerflächen 2,2' angebracht sind. Die äußeren Lagerflächen sind dabei nicht mehr unbehandelt.

Durch die über die Nasen gewährleistete passgenaue Positionierung des Zylinders auf den Ablageflächen während des Prozesses ist das Einspannen an den korrekten Positionen erreicht.

Eine etwas speziellere Ausführungsform benutzt ein Verfahren zur Herstellung eines Zylinders, der auf seiner Mantelinnenseite an beiden Rändern jeweils einen Teilbereich 5 enthält, der als Zahnkranz gestaltet ist. Diese Zahnkränze dienen in einer größeren Baugruppe zur Aufnahme von weiteren Zahnrädern beispielsweise den Zahnrädern eines Getriebes.

Die Herstellung der Zahnkränze erfolgt dabei ausschließlich über das Gussverfahren und die Zahnflanken werden nicht nachbearbeitet. Die Lagerflächen 2,2' werden in dieser Ausführungsform von den unbearbeiteten Zahnflanken gebildet.

Das verwendete Spannwerkzeug greift dann direkt in eine definierte Anzahl von Zähnen ein.

Die verbleibenden Rohgussstellen also die Verzahnung 20 und 21 und somit die Lagerflächen 2 und 2' des Fertigteils werden durch ein einziges Element nämlich einen Mittelkern beim Druckgießen erzeugt. Dabei werden zwei außenliegenden Nasen an den außenliegenden Flächen der Bereiche gegossen in denen innen die Verzahnung 20, 21 ausgebildet wird.

Bei der mechanischen Fertigung muss das Rohteil mit der außenliegenden Nase 11 an der außenliegenden Fläche der Verzahnungen 20 drehorientiert auf einem speziell erstellten Werkstückträger aufgesetzt werden. Würde das Rohteil verdreht aufgelegt werden und somit außerhalb der Nasensperre auflegt werden, wäre der Code nicht mehr lesbar.

Für das Überdrehen der äußeren Mantelfläche 9 des Zylinders 1 muss das Rohteil mit dem internen Handling der Drehmaschine von dem Werkstückträger genommen und um 180° gewendet werden. An der nächsten Ablagestation für das gewendete Bauteil muss das Bauteil mit der außenliegenden Nase 3 an der außenliegenden Fläche der Verzahnungen 21 direkt in eine weitere Aussparung der Ablagestation aufgesetzt werden.

Eine Aufnahme-Spindel der Drehmaschine für das Außenüberdrehen des Zylinders 1 holt das Bauteil ab und stellt es nach dem Drehen wieder genau mit der gleichen Drehorientierung auf einer Ablagestation ab. Beim Außenüberdrehen des Zylinders wird das Rohteil an beiden Verzahnungen 20 und 21 auf einem Zahnkopf rundgespannt, wobei das Spannwerkzeug an den Lagerflächen 2,2' anliegt, was optimal den Einbauzustand des Zylinders in der Baugruppe wiederspiegelt.

Das interne Handling der Drehmaschine dreht das Halbfertigteil um 180° zurück und stellt es wieder genau mit einer definierten Drehorientierung auf eine Ablagestation ab, wobei diese Ablagestation Zapfen aufweist, die in die Verzahnung 20 des Halbfertigteil eingreifen.

Zum Innendrehen des Zylinders 1 wird das Halbfertigteil außen genau gegenüber der innenliegenden Spannstellen der Verzahnungen 20 und 21, erneut rundgespannt und liegt in der Achsenrichtung des Zylinders an der Stirnfläche 23 an .

Eine Aufnahme-Spindel für das Innendrehen des Zylinders 1 holt das Bauteil von der letzten Ablagestation ab und stellt es nach dem Drehen wieder genau mit der gleichen Drehorientierung auf einer Ablagestation ab, wobei auch diese Ablagestation Zapfen besitzt mit denen das fertig gedrehte Bauteil in der Verzahnung 20 fixiert wird.

Ein robotischer Greifer der Drehmaschine nimmt das fertig gedrehte Bauteil von der Ablagestation und stellt es mit genau der gleichen Drehorientierung auf dem Werkstückträger ab, wobei der Werkstückträger wiederum Zapfen besitzt, mit denen das fertig gedrehte Bauteil in der Verzahnung 20 fixiert wird.

Für Anwendungen des Zylinders als schnell drehenden Bauteil einer Baugruppe muss das abgedrehte und so vorbereitete Bauteil noch ausgewuchtet werden.

Zum Wuchten des Zylinders wird das Bauteil mit den beiden Verzahnungen 20 und 21 erneut auf dem Zahnkopf des Spannwerkzeugs rundgespannt und liegt in Achs-Richtung an den Anlageflächen 2,2' an. Dies ist identisch mit den Spannstellen des Außenüberdrehens des Zylinders, wobei alle Anlageflächen beim Wuchten Rohgußflächen sind, was optimal den Einbauzustand des Topfes in der Baugruppe wiederspiegelt.

Ein Greifer nimmt das fertig gedrehte Bauteil vom Werkstückträger drehorientiert ab und legt dieses drehorientiert in das Spannmittel der Wuchtanlage ein, damit die Ausgleichsbohrungen gesetzt werden können. Nach Beendigung des Wuchtvorgangs dreht sich die Spindel wieder in die gleiche Position wie bei der Bauteilaufnahme und der Greifer holt das gewuchtete Bauteil und setzt es drehorientiert auf dem Werkstückträger ab. Ein Roboter nimmt das fertig gewuchtete Bauteil vom Werkstückträger drehorientiert ab und legt dieses drehorientiert in das Spannmittel der Bürstanlage ein, wobei das Spannmittel einen speziellen Zapfen besitzt mit dem das Fertigteil in der Verzahnung 20 fixiert wird. Nach Beendigung eines Bürstvorgangs dreht sich das Spannmittel wieder in die gleiche Position wie bei der Bauteilaufnahme und der Roboter holt das gebürstete Bauteil und setzt es drehorientiert auf dem Werkstückträger einer Waschmaschine ab.

Nach Beendigung des Waschvorgangs nimmt ein Roboter das gewaschene Bauteil, dreht es um 180° und setzt es drehorientiert auf das Spannmittel einer Messmaschine und ermöglicht das Vermessen des Bauteils an einer präzisen Position, die durch die Stellung der Zähne der Verzahnungen 20,21, die eine unterschiedliche Anzahl an Zähne haben, gegeben ist.

## Patentansprüche

1. Verfahren zur Herstellung eines rotationssymmetrischen, dünnwandigen Guss-Bauteils (1) aus Aluminium oder einer Aluminiumlegierung in Druckguss, das teilweise auf seinen inneren und/oder äußeren Mantelflächen überarbeitet wird, **dadurch gekennzeichnet, dass** mindestens ein Teil (5) der Mantelflächen (9,10) unbearbeitet bleibt und sowohl als kraftschlüssige Lagerfläche (2, 2') zum Spannen des Bauteils als auch für einen Einbau in eine Baugruppe verwendet wird.

2. Verfahren nach Anspruch 1 **dadurch gekennzeichnet, dass** das Spannen des Bauteils durch Rundspannen mit einem Spannwerkzeug erfolgt.

3. Verfahren nach Anspruch 2 **dadurch gekennzeichnet, dass** das Rundspannen sowohl durch Spannen an Lagerflächen (2, 2') an der Mantelinnenseite (10) als auch durch Spannen an der Mantelaußenfläche (9) erfolgt.

4. Verfahren nach Anspruch 1 **dadurch gekennzeichnet, dass** das die Lagerflächen (2,2') durch Zahnflanken einer Innenverzahnung (20,21) gebildet werden.

5. Verfahren nach Anspruch 4 **dadurch gekennzeichnet, dass** die Zahnflanken, die als Lagerfläche dienen, die Positionierung des zylindrischen Bauteils (1) auf einer Auflagerfläche der Produktionsanlage definieren.

6. Verfahren nach Anspruch 1 **dadurch gekennzeichnet, dass** die Positionierung über angegossenen Nasen am Bauteil erfolgt.

7. Verfahren nach Anspruch 5 oder 6 **dadurch gekennzeichnet, dass** die Positionierung des zylindrischen Bauteils mindestens im spanenden Prozess, als auch in der messtechnischen Erfassung erfolgt.

## Claims

1. Process for producing a rotationally symmetrical, thin-walled cast component (1) of aluminium or an aluminium alloy by die casting, which is reworked partially on its inner and/or outer lateral surfaces, **characterized in that** at least a part (5) of the lateral surfaces (9, 10) remains unmachined and is used both as a non-positively locking bearing surface (2, 2') for bracing the component and also for installation in an assembly.

2. Process according to Claim 1, **characterized in that** the component is braced by round bracing using a bracing tool.

3. Process according to Claim 2, **characterized in that** the round bracing is effected both by bracing on bearing surfaces (2, 2') on the inner lateral side (10) and also by bracing on the outer lateral surface (9).

4. Process according to Claim 1, **characterized in that** the bearing surfaces (2, 2') are formed by tooth flanks of an internal toothing system (20, 21).

5. Process according to Claim 4, **characterized in that** the tooth flanks which serve as a bearing surface define the positioning of the cylindrical component (1) on a support surface of the production plant.

6. Process according to Claim 1, **characterized in that** the positioning is effected by way of lugs cast onto the component.

7. Process according to Claim 5 or 6, **characterized in that** the cylindrical component is positioned at least in the cutting process, and also in the acquisition by measurement.

## Revendications

1. Procédé de fabrication d'un composant coulé à paroi mince, de forme symétrique de révolution (1), en aluminium ou un alliage d'aluminium par coulée sous pression, qui est partiellement réusiné sur ses surfaces latérales intérieure et/ou extérieure, **caractérisé en ce qu'**au moins une partie (5) des surfaces latérales (9, 10) reste sans usinage et est utilisée aussi bien comme face d'appui par adhérence (2, 2') pour le serrage du composant que pour un montage dans un groupe de construction.

2. Procédé selon la revendication 1, **caractérisé en ce que** le serrage du composant est effectué par un serrage rond dans un outil de serrage.

3. Procédé selon la revendication 2, **caractérisé en ce que** le serrage rond est effectué aussi bien par serrage sur des faces d'appui (2, 2') sur la surface latérale intérieure (10) que par serrage sur la surface latérale extérieure (9).

4. Procédé selon la revendication 1, **caractérisé en ce que** les faces d'appui (2, 2') sont formées par des flancs de dents d'une denture intérieure (20, 21).

5. Procédé selon la revendication 4, **caractérisé en ce que** les flancs de dents, qui font office de face d'appui, définissent le positionnement du composant cylindrique (1) sur une face de dépôt de l'installation de production.

6. Procédé selon la revendication 1, **caractérisé en ce que** le positionnement est effectué sur des ergots moulés sur le composant.

7. Procédé selon la revendication 5 ou 6, **caractérisé en ce que** le positionnement du composant cylindrique est effectué au moins dans le processus d'enlèvement de copeaux aussi bien que dans la détection de mesures techniques.
